**Europäisches Patentamt**

(19) **European Patent Office**

**Office européen des brevets**

(11) Publication number: **0 123 330**
**A2**

(12) # EUROPEAN PATENT APPLICATION

(21) Application number: **84200345.1**

(22) Date of filing: **12.03.84**

(51) Int. Cl.³: **H 04 M 15/34**

(30) Priority: **21.03.83 IT 2017483**

(43) Date of publication of application:
**31.10.84 Bulletin 84/44**

(84) Designated Contracting States:
**AT BE CH DE FR GB LI LU NL SE**

(71) Applicant: **ITALTEL SOCIETA' ITALIANA**
**TELECOMUNICAZIONI spa**
**P.le Zavattari, 12**
**I-20149 Milano(IT)**

(72) Inventor: **Panfili, Gabriele**
**Via S. Martino 1**
**Jerago (VA)(IT)**

(72) Inventor: **Besi, Mario**
**Piazzale Zavattari 3**
**Milano(IT)**

(74) Representative: **Coggi, Giorgio**
**ITALTEL Società Italiana Telecomunicazioni s.p.a.**
**(Servizio Brevetti) Via A. di Tocqueville 13**
**I-20154 Milano(IT)**

(54) **Circuital arrangement for counting and dividing the taxation impulses pertaining to a generical telephone line.**

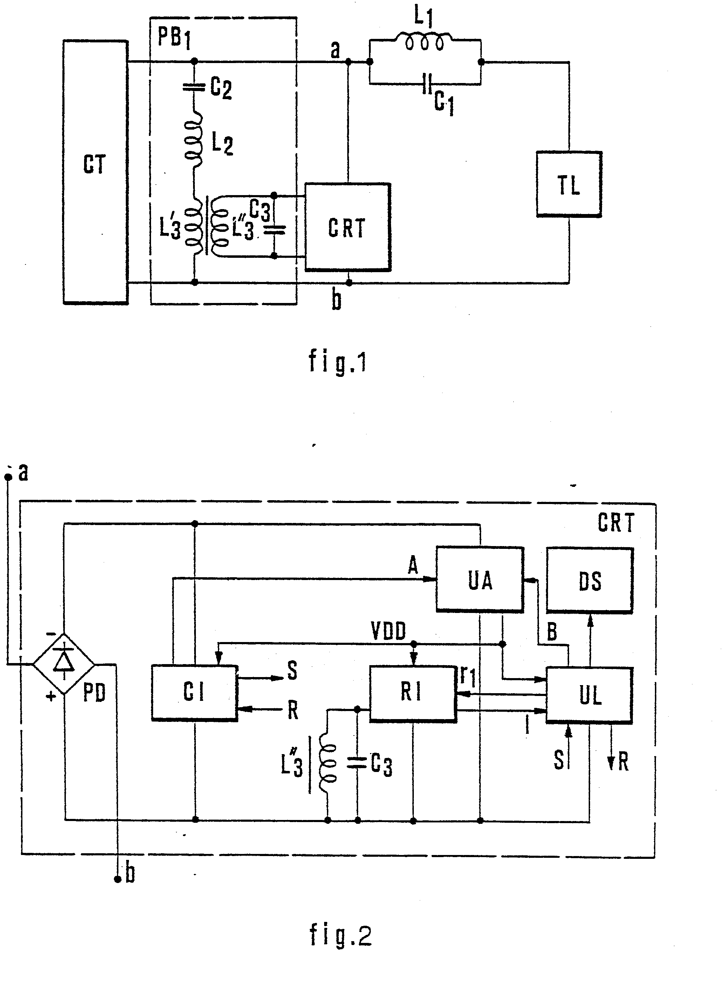

(57) The present invention relates to a circuital arrangement adapted to divide the charges pertaining to a telephone line among the users of the terminal/s connected to the line itself. An identification code number is given to each user. At the engagement of the telephone line the circuital arrangement connects, in parallel with terminal (TL) an inhibiting (CI) adapted to prevent the switching exchange (CT) from detecting the dialled digits. These are however detected by a logic unit (UL) and if they coincide with one of the allowed code numbers, the inhibiting circuit (CI) is excluded, thus allowing the exchange (CI) to detect the next selection. Possible taxation impulses, generated by the switching exchange (CT) are summed in a memory element associated with the dialled code number (figure 2).

fig.2

-1-

"Circuital arrangement for counting and dividing the taxation impulses pertaining to a generical telephone line"

The present invention relates to a circuital arrangement designed to be associated with a subscriber's telephone line, adapted to receive the taxation impulses generated by the switching exchange and also to divide such impulses over a plurality of memory units, each associated with a respective user.

The technical problem of the present invention is therefore that of dividing the charges relating to a predetermined telephone line among the users of the terminal connected to the line itself. The now displayed problem is usually solved by way of devices for recording telephone traffic that are associated with a multiline telephone set in order to divide, among the sets provided in the installation, the charges of the installation itself.

Such recording devices generally provide the presence of elements detecting the data relative to a telephone connection (e.g. calling number and called number, etc.) which is associated with a printing-machine. This renders available a list showing the aforesaid data with the indication of charges.

The devices in question present a high cost, above all for the presence of said printing machine, so that they may be only utilized in multiline telephone installations of certain dimensions.

Moreover, the total amount of charges to be debited to each user must be necessarily obtained by performing further processing operations.

Purpose of the present invention is that to solve the said technical problem by way of particularly simple and economical circuital arrangements in order to allow the charge division even in single telephone installations.

Another purpose is that to allow the charge division so that the total amount to be debited to each user may be obtained without performing any processing operation.

The procedure of division according to the present invention provides the allotment to each user of the terminal (e.g. consisting of a telephone set) of a respective identification code number.

The telephone set may be used to perform a call only when the user dials his own

identification code number. The circuital arrangement is in fact equipped with means that, at the beginning of the dialling operations, determine the insertion, in parallel with the telephone set, of an inhibiting electric branch designed to prevent the exchange from detecting the digits dialled by the subscriber.

Such digits are however detected by the circuital arrangement which compares them with the code numbers stored therein. If the comparison has positive result the inhibiting electric branch is excluded in order to allow the switching exchange to detect the number of the dialled suscriber and to establish the relative connection. If the switching exchange, after the requested connection, generates taxation impulses, these are extracted from the line, counted and the result of the counting is transferred into a first memory area associated with the identification code number that has been previously dialled; such a first memory therefore stores the number of impulses summed during a single connection.

The total amount of impulses for any subscriber results to be stored in a second memory area whose contents is updated after that the switching exchange has completed the taxation of a call originated by the subscriber in question.

By way of predetermined arrangements the contents of the second memory area of each user may be monitored over a display thus rendering possible the division of the charges with no need of processing operations, according to the stated purpose.

The circuital arrangement according to the invention provides the presence in combination of the following characteristic elements:

- a passband filter, tuned on frequency F1 of the taxation impulses and connected in parallel with the telephone terminal;

- a circuit for the identification of taxation impulses adapted to energize its own output when the edges of the resonant circuit provides a predetermined number of oscillations with frequency F1;

-an inhibiting circuit adapted to render available a first signal whose level indicates the condition of the telephone line and also adapted to determine the shifting, in parallel with the telephone terminal, of a current of predetermined entity in response to a control generated by a logic unit and in response to an opening of the telephone line performed by the terminal;

- a logic unit, adapted to store a predetermined number of identification code numbers, further adapted to rebuild the digits dialled by the subscriber on the ground of the test of said first signal, as well as to generate a signal for the control of the inhibiting circuit and also to divide over a memory element associated with the code number dialled by the subscriber , the taxation impulses rebuilt by processing the output of the circuit for the identification of taxation impulses;

- a supply unit adapted to extract energy from the telephone line and also adapted to render available the supply voltage of the circuits specified above.

Further characteristics of the solution will appear from the following description of a non-limiting embodiment and with reference to the accompanying drawings, in which:

- figure 1 shows a telephone installation which is connected to the circuital arrangement according to the invention;

-. figure 2 shows a block diagram of the circuital arrangement according to the invention;

- figure 3 shows in detail the inhibiting circuit CI of figure 2;

- figure 4 shows in detail the supply unit UA of figure 2;

- Figure 5 shows in detail the circuit arranged to identify taxation impulses RI of figure 2;

- figure 6 shows in detail a first embodiment of the logic unit UL of figure 2;

- figure 7 shows a first section UL1 of a second embodiment of the logic unit UL of figure 2;

- figure 8 shows a second section UL2 of the second embodiment of the logic unit UL of figure 2.

In figure 1, CT indicates a switching telephone exchange which is connected to a subscriber's telephone set, e.g. consisting of a telephone set TL, via a line i whose wires have been labeled a, b.

The circuital arrangement according to the invention performs the counting and division of taxation impulses and has been labeled CRT. It may be obviously connected to a telephone line which receives taxation impulses from the switching exchange CT. These impulses are in fact generated by unit CT by sending over the line oscillation trains whose frequency F1 is usually equal to 12KHz.

The telephone lines equipped with taxation impulse senders result to be connected to receivers of such impulses which are tuned in this frequency F1.

In particular, a parallel resonant circuit is usually provided, which consists of inductance L1 and capacitance C1 and is adapted to prevent the taxation impulses from reaching unit TL; there is also provided a bandpass filter PB1 adjusted on frequency F1 of passive type for consumption reasons, which has been provided by way of a ZOBEL semicell.

In particular this semicell provides the presence of an inductance L2 and of a capacity C2, as well as of an inductance L3 which is connected in parallel with a capacity C3. In order to avoid bounds as to the polarity applied to the line wires, inductance L3 has been provided by way of a transformer winding L3' and L3".

Unit CRT results therefore to be coupled with the said semicell and connected to wires a, b of the line via a bridge of diodes as shown in figure 2. According to this figure the bridge of diodes has been labeled PD and is designed to keep unchanged the polarities present on the output wires even though the polarities applied to wires a, b are reversed in exchange CT.

The outputs of unit PD are connected in parallel with an inhibiting circuit CI which is adapted to render available a signal S whose level indicates the condition of the telephone line (line closed or open).

Unit CI further comprises an inhibiting electric branch whose activation, in presence of an opening of the telephone line, determines the shifting of a current of a predetermined entity in parallel with the telephone set TL; this current provides however a bit lower value than that of the current which usually flows on the telephone line in response to an engagement operation.

On picking up the microtelephone, unit CI detects the engagement of the telephone line and activates signal S which is applied to the input of a logic unit UL; in response to this event, this unit activates one of its outputs R thus enabling the said inhibiting electric branch present in unit CI to be active.

The activation of the said branch is detected when the subscriber, performing a selection operation, determines the first opening of the telephone line.

When the subscriber performs a selection operation there is detetcted the activation of the said inhibiting electric branch that, causing a shitting of the said predetermined current, prevents the switching exchange CT from detecting the openings of the telephone line and consequently the selection digits. As a consequence people not authorized to use the telephone set cannot illicitly effect callas, since exchange CT does not either detect selection digits or establish any connection. The inhibiting electric branch is disactivated by logic unit UL when the subscriber disengages the telephone line. The owner of the telephone set may authorize a predetermined number of subscribers to use the set by giving a respective identification code number to every one of them.

When desiring to effect a call, each of these authorized people dials the respective identification code number which is detected by the logic unit UL on the ground of the test of the said signal S. Should the code number be corresponding to one of the allowed code numbers, unit UL energizes an output R which determines the exclusion of the said inhibiting electrci branch and from now on the exchange is enabled to detect the digits dialled by the subscriber and to establish the required connection.

If the connection in question involves the emission of taxation impulses by unit CT, these are applied to the input of a circuit RI adapted to identify the taxation impulses and to be connected to the output of the banpass filter PG1. When unit CT generates a taxation impulse a series of activations of output I of circuit RI is detected and this series is processed by logic unit UL; it this latter, on the ground of the result of said processing, displays the presence of a taxation impulse, it stores it into a memory area associated with the identification code number which has been previously dialled. Since unit UL comprises a number of memory areas not smaller than the number of subscribers, it results that the charge division may be performed by reading the contents of such memory areas.

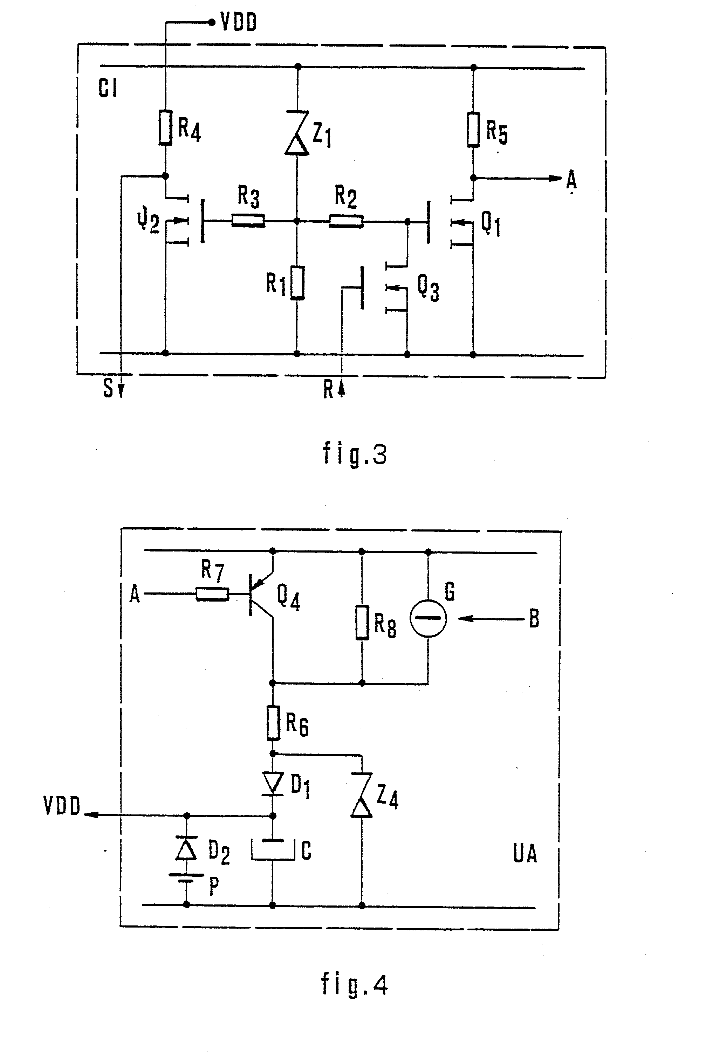

Unit UL is in fact associated with a display DS adapted to allow the performance of the aforesaid reading operations. The units specified above receive the supply voltage VDD from a supply unit UA which is connected to the telephone line and in some phases results controlled by the logic unit UL via output B, as described in the following description of figure 4.

Figure 3 shows an embodiment of the inhibiting circuit CI of figure 2 which is synthetically described, being already detailed with other embodiments in the Italian patent application No. 20173 A/83 in the name of the same Applicant.

Unit CI comprises a threshold circuit consisting of a Zener diode Z1 and of a resistance R1 which is connected to a first and a second transistor Q1 and Q2 via resistances R2 and R3. Transistor Q1 presents the gate electrode connected to the drain electrode of a further transistor Q3 which receives the said signal R over the gate electrode and further provides the drain electrode connected to a resistance R5. Transistors Q1 and Q3 form the said inhibiting electric branch whose activation occurs when transistor Q3 is cut off and when the output of the threshold circuit (anode of Z1) is active.

Transistor Q2 provides the drain electrode connected to said supply voltage VDD via a resistance R4 and is conductive when the output of the threshold circuit (line open) is active, whereas it is cut off when the threshold circuit is deenergized (line closed).

Signal S is extracted over the drain electrode of unit Q2 and provides therefore a level depending on the line condition.

Figure 4 shows an embodiment of the supply unit UA of Figure 2 which is also described synthetically, being it better detailed in the aforesaid patent application.

Unit UA mainly consists of a capacitor C which is located, via a diode D1 and a resistance R6, by the telephone line via a resistance R8. In the instants when said transistor Q1 is conductive, unit C may be also loaded via a transistor Q4 whose base is connected to a resistance R7 and whose collector is connected to a resistance R6. Voltage VDD is available at the edges of unit C and is reduced by a Zener diode Z4 and possibly integrated by a cell P in series with a diode D2. When the logic unit UL must perform operations requiring an energy absorption (such as writing operation of memories) a current generator G is activated by the same logic unit (output B), the said generator causing the extraction from the telephone line of an additional energy.

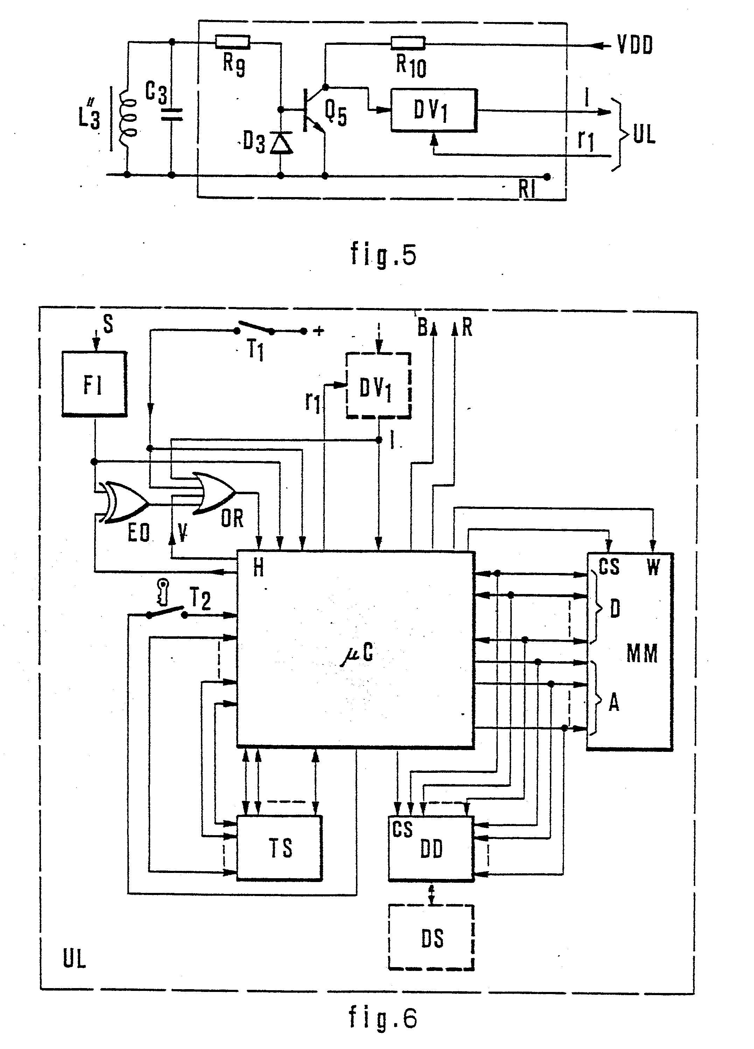

Figure 5 illustrates in detail the unit adapted to identify the taxation impulses RI which results connected to the output of the bandpass filter via a resistance R9 and comprises a transistor Q5.

A diode D3 is connected between the base of transistor Q5 and the other end of the output of the filter and is designed to render symetrical the charge seen from the filter. Thus, in the positive half-period, this latter sees the junction of Q5, while in the negative half-period it sees the junction of such diode D3. The collector of unit Q5 results instead to be connected to said voltage VDD via a resistance R10.

When the output of the filter provides an oscillation train of frequency F1, transistor Q5 becomes conductive in coincidence with the positive half-period of each oscillation.

The collector of unit Q5 renders therefore available a rectangular wave amplified signal of frequency F1. Unit Q5 therefore represents an amplifier which requires energy from unit UA only in the instants when (in presence of signal F1) becomes conductive and consequently its energy absorption is null in absence of taxation impulses.

This rectangular wave signal is applied to the input of a frequency divider DV1 whose output renders available the said signal I which is designed to be tested by the logic unit UL which also generates signal r1 for its resetting.

Unit DV is designed to render available a signal of such a frequency as to be tested by a logic unit and is also arranged to provide a filtering element against disturbances possibly present at the edges of the resonant circuit.

In fact, assuming that the division factor of unit DV is equal to N, the activation of signal I requires N/2 disturbance impulses between two consecutive resetting operations.

Figure 6 illustrates a preferred embodiment of logic unit UL which mainly consists of a unit uC of the low consumption type.

-8-

In fact, as unit UL is supplied with energy extracted from the telephone line, it is absolutely important minimizing the quantity of extracted energy in order not to increase relevantly the voltage fall occuring on the telephone line.

To this aim unit uC provides an input H that on reception of a predetermined logic level sets unit uC into the low consumption condition. It is particularly possible setting unit uC in a condition in which the main functions result "frozen", thus obtaining a consumption of negligible extent. The logic unit according to the invention is so structured as to keep steadily unit uC in the low consumption condition as well as to determine the getting out of this condition only for a short time interval in response to a variation of input signals.

Signal S is in fact applied to the input of unit uC via an impulse shaper FI and via an exclusive logic sum EO; the output of this latter is connected to a further logic sum circuit OR.

Unit EO allows to operate according to the aforesaid formality, since the second input receives a respective output of unit uC.

In response to a level variation of signal S the activation of said signal H is detected and consequently unit uC gets out of the low consumption condition and performs the operations provided by the operative program. After having carried out these operations, unit uC changes the level of the signal present at the second input of unit EO returning into the low consumption condition until the next variation of signal S.

The remaining inputs of unit OR receive the output I of said frequency divider DV1, a signal applicable through the activation of a pushbutton T1, as well as an output V of unit uC whose meaning will be specified later on. Unit uC is further connected to a random access memory of the nonvolatile type MM as well as a control circuit DD of display DS; such units receive from unit uC both data D and addresses A, as well as a selection control cs of the unit which data are destined to and possibly a writing control w. Unit uC is further associated with a keyboard TS and a further switch T2 which may be activated by a key.

The random access memory MM are subdivided into a number of areas not smaller than the number K of the users of the telephone set.

In particular the memory of unit uC comprises K memory areas designed to receive the identification code numbers of the K subscribers and at least an area of work destined to sum the taxation impulses received during a telephone conversation.

Instead, memory MM comprises K memory areas, each of them being designed to receive the number of impulses for a respective user and also comprises a further memory area adapted to receive the total number of impulses pertaining to the telephone line in question.

the key is designed to be utilized by the owner of the terminal via the allotment to each memory area of a respective identification code number.

This operation is actuated by way of pushbutton T1 in order to determine the getting out of $\mu$C from the low consumption condition and by activating switch T2 by way of this key in order to enable $\mu$C to perform an operation of "code number allotment".

Through keyboard TS the owner dials then the number of the memory area (e.g. area 7) and the code number (e.g. 7701) given to said area.

The aforesaid procedure is repeated for each of the remaining areas.

When a generical subscriber engages the line the inhibiting circuit CI activates the said signal S and the engagement is detected by unit $\mu$C. This latter energizes its own output R and consequently when the subscriber starts a selection operation, there is detected the insertion of the said inhibiting electric branch comprised in unit CI.

Assuming that the user in question be the assignee of the memory area 7, he dials his own code number 7701 which is detected by unit $\mu$C and compared with those allowed. If the comparison has positive result, unit $\mu$C causes the exclusion of the inhibiting branch, this exclusion being in any case controlled by unit $\mu$C when, on the ground of the test of signal S, detects an opening of long duration of the telephone line and consequently detects the end of the engagement. The comparison with positive result supplies unit $\mu$C with the indication of the subscriber who has performed the engagement and consequently this unit is adapted to send taxation impulses into the memory area (area 7) associated with that code number.

The subscriber then dials the number of the called subscriber thus allowing unit CT to establish the connection. If unit CT generates taxation impulses, these are detected via the said circuit RI by unit µC which stores them in the said area of work of its own internal memory.

At the end of the connection and the taxation operation is completed, unit µC provides for summing the number of impulses stored in the area of work of its internal memory to the contents of area 7 of unit MM and to the contents of the area of the total number.

The results of the sums are then transferred into memory MM for being extracted whenever the subscriber wishes to examine the number of taxation impulses that have been totalized; in order to do so, the subscriber operates pushbutton T1 thus causing the activation of the output of circuit OR and consequently the activation of input H of unit µC. In response to this event, this latter unit energizes an output V for a time interval equal to the time provided for supplying the display.

The user dials then the indicative 7 of his memory area via keyboard IS and the contents of this area is monitored on display DS, via the said unit DD, for a time interval equal to the energization of output V of µC; thus, a reduction of energy consumption is detected.

In view of the aforesaid, it is evident that all charge division operations may be effected without resorting to processing operations in accordance with the stated purpose.

Similar operations may be performed for controlling the monitoring of the total. A possible reset of the memory areas of unit MM may be controlled by the owner , e.g. through a procedure such as: activation of pushbutton T1, activation of key T2 and activation of one or more keys of unit TS.

Without digressing the solution, it is possible monitoring the impulses pertaining to each user in a different form from the now considered one, thus rendering superfluous the presence of units MM, DD and DS.

In fact, unit µC may be connected to a number of mechanical counters (not shown) in the same number as that of the aforesaid memory areas. After detecting the code number of the subscriber who has engaged the telephone line unit μC sends the taxation impulses concerning the connection in progress towards the counter associated with the detected code number.

Thus, each counter steadily supplies the information of the number of impulses pertaining to the relative user.

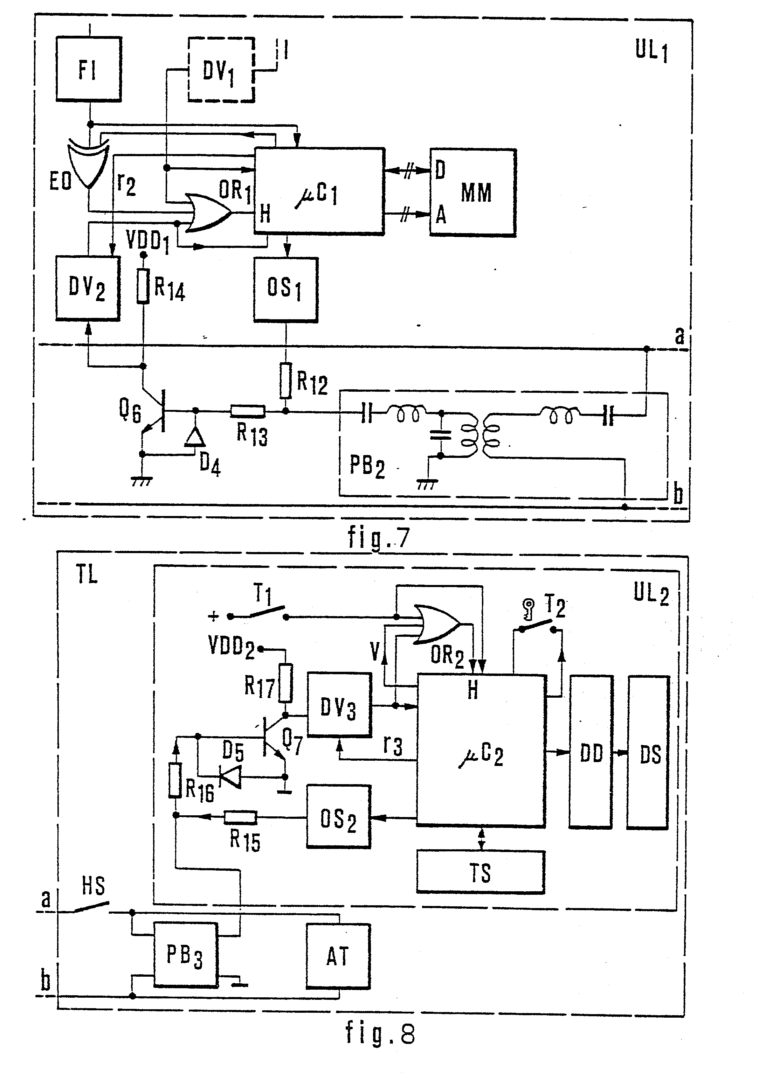

Figure 7 shows a second embodiment of the logic unit UL (labeled UL1) adapted to cooperate with a further logic unit UL2 associated with the telephone set TL (see figure 8) in order to telecontrol the reading operations of the contents of memory MM from the telephone set itself.

Similarly to what described with reference to the first embodiment shown in figure 6, unit UL1 comprises a microcomputer μC1 which is associated with said memory MM as well as with a frequency divider DV1 and with the said impulse shaper F1, via units EO and OR1.

Keyboard TS, display DS, switches T1 and T2 are instead associated with a microcomputer μC provided in unit UL2. Unit μC2 may be formed by the same microcomputer provided for istance in keyboard telephone sets, so as unit TS may consist of the keyboard of the telephone set suitably enlarged.

The exchange of information between units μC1 and μC2 is performed via a respective transceiving equipment connected to the telephone line.

The transceiver associated with unit uC1 comprises an oscillator OS1 that, in response to the activation of an output of the microcomputer, generates an oscillation train of frequency F2 of a value for istance equal to 36KHz.

The output of unit OS1 results to be connected (via a resistance R12) with an edge of a banpass filter PB2 provided by way of a ZOBEL cell, whose inductance is formed by the winding of a transformer. The same edge of unit PB2 results to be connected (via a resistance R13) on the ground of a transistor Q6 whose collector is connected to a supply source VDD1 (via a resistance R14).

A diode D4 having the same function as diode D3 is connected between the base and the emitter of Q6. The collector of unit Q6 is connected to a frequency divider DV2, having the same function as the said unit DV1 which results

0123330

-12-

connected to the input of the same logic sum unit OR1 and reset by signal r2. The other edge of unit PB2 results connected to the telephone line.

The transceiving equipment associated with unit $\mu$C2 comprises units corresponding to those specified now. In particular there may be noted a bandpass filter PB3 providing an edge connected between the hook MS of the microtelephone and circuits AT of the telephone set TL, while it provides the other edge connected to the output of an oscillator OS2 (via a resistance R15) as well as to the base of a transistor Q7 (via a resistance R16) whose collector is connected to a supply source VDD2 (via a resistance R17); a diode D5 having the same functions as the said diode D3 is connected between the base and the emitter of Q7.

The collector of Q7 is further connected to a frequency divider DV3, whose output is applied to the input of unit $\mu$C2 via a logic sum unit OR2 whose output is connected to the said input H of microcomputer $\mu$C2.

The exchange of information between unit $\mu$C2 and unit $\mu$C1 occurs according to formalities comparable with a binary configuration, since a fixed number of oscillation groups of frequency F2 (e.g. 8 groups) is everytime transmitted, where each group presents a long or short duration with relation to the logic level (one or zero) of the binary information to be transmitted.

Thus the binary configuration (e.g. of 8 bits) may be transmitted through the emission of a predetermined number of duration modulated oscillation groups.

When the user wishes to monitor the contents of a generical memory area, he operates pushbutton T1 (see figure 8) as well as the key of unit TS corresponding to such an area.

Unit $\mu$C2 detects such events and codes them according to the aforesaid formalities, thus determining the emission by OS2 of a predetermined number of oscillation groups modulated as stated above. Such groups are detected by unit $\mu$C1 via unit PB3, the telephone line and units PB2, Q6 and DV2.

Unit $\mu$C1 detects the duration of the single oscillation groups and rebuilds the binary configuration indicating the control generated by $\mu$C2 following to the operation performed by the user.

Upon interpretation of the request, unit μC1 extracts from the respective area of unit MM a binary configuration indicating the number of taxation impulses totalized therein and transfers such a configuration into unit μC2 translating it as stated above into a plurality of activations of unit OS1. The oscillation groups generated by OS1 are applied to μC2 via units PB2, telephone line, PB3, Q7 and DV3.

Unit μC2 therefore determines the monitoring of the information received on display DS via the relative control circuit DD.

It is evident that the use of units illustrated in figures 7 and 8 allows to perform all the operations previously described with reference to figure 6, by telecontrolling the performance of such operations from the telephone set TL.

CLAIMS

1) A circuital arrangement adapted to count and divide taxation impulses pertaining to a generical telephone line among the users of the terminal/s connected to the line itself, characterized in that it comprises in combination the following characteristic elements:

- a first bandpass filter (PB1) tuned in frequency F1 of the taxation impulses, connected in parallel with the telephone terminal (TL);

- a circuit for the identification of taxation impulses adapted to energize its output when a predetermined number of oscillations of frequency F1 is available at the edges of the resonant circuit;

- an inhibiting circuit (CI) adapted to render available a first signal (S) whose level indicates the condition of the telephone line and also adapted to determine the shifting, in parallel with the telephone terminal (TL), of a predetermined current in response to a control (R) generated by a logic unit (UL) and in response to an opening of the telephone line;

- a logic unit (UL) adapted to: a) store a predetermined number of identifcation code numbers; b) activate the said inhibiting circuit (CI) whenever it detects the activation of the first signal (S); c) rebuild the digits dialled by the subscriber on the ground of the text of said first signal (S); d) disactivate the inhibiting circuit (CI) if the dialled digits coincide with one of the stored code numbers; e) forward to a memory element, associated with the code number dialled by the subscriber, the impulses available at the output of the said circuit (RI) for the identification of taxation impulses;

- a supply unit (UA) adapted to extract energy from the telephone line and also adapted to render available the supply voltage (VDD) of the circuits specified above.

2) A circuital arrangement as claimed in claim 1 characterized in that the said circuit (RI) for the identification of taxation impulses provides the presence in combination of the following characteristic elements:

- a first transistor (Q5) whose base is connected to the output of the first

bandpass filter (PB1) via a first resistance (R9), whose emitter is connected to the other wire of said output of the first bandpass filter and whose collector receives the said supply voltage (VDD) via a second resistance (R10);

- a first frequency divider (DV1) whose input is connected to the collector of the first transistor (Q5).

3) A circuital arrangement as claimed in claim 1, characterized in that the said logic unit (UL) provides the presence in combination of the following characteristic elements:

- a first microcomputer ($\mu$C) of the type that assumes the low consumption condition in response to the activation of the first input (H);

- an exclusive logic sum circuit (EO) whose first input is applied to the said first signal (S) and whose second input is connected to an output of the microcomputer ($\mu$C);

- a first logic sum circuit (OR) whose output is connected to the said first input of the microcomputer, whose input is adapted to receive the output of the exclusive logic sum circuit (EO), a signal via a first pushbutton switch (T1), an output (V) of the said microcomputer, and the output of the said frequency divider (DV1);

- a selection keyboard (TS) connected to input-output channels of the microcomputer ($\mu$C);

- a second switch (T2) connected to an input-output channel of the microcomputer (uC);

- a plurality of memory elements connected to the microcomputer ($\mu$C);

4) A circuital arragement as claimed in claim 1, characterized in that the said logic unit (UL) consists of a first section (UL1) associated with the same circuital arrangement and of a second section (UL2) associated with the telephone terminal (TL).

5) A circuital arrangement as claimed in claim 4, characterized in that the said first section (UL1) of the logic unit provides the presence in combination of the following characteristic elements:

- a first microcomputer (μC1) that assumes the low consumption condition in response to the activation of the first input (H);

- an exclusive logic sum circuit (EO) whose first input is applied to said first signal (S) and whose second input is connected to the output of the first microcomputer (μC1);

- a first logic sum circuit (OR1) whose output is connected to the said first input of the first microcomputer (μC1), whose input is adapted to receive the output of the said exclusive logic sum circuit (EO), the output of the said first frequency divider (DV1) and the output of a second frequency divider (DV2);

- a plurality of memory elements connected to the first microcomputer (μC1);

- a second bandpass filter (PB2) presenting the first side connected to wires (a, b) of the telephone line, tuned in a second frequency (F2);

- a second transistor (Q6) presenting the base connected, via a third resistance (R13) to the second side of the second bandpass filter (PB2) and the collector connected to the said supply source (VDD), via a fourth resistance (R14) as well as to the input of the said second frequency divider (DV2);

- a first oscillator (OS1), adapted to generate the said frequency F2 in response to a control generated by the first microcomputer (μC1) providing the output connected to the second side of the second bandpass filter (PB2) via a fifth resistance (R12).

6) A circuital arrangement as claimed in claim 4, characterized in that the said second section (UL2) of the logic unit provides the presence in combination of the following characteristic elements:

- a second microcomputer (μC2);

- a third bandpass filter (PB3) presenting the first side connected to wires (a, b) of the telephone line, tuned in the said second frequency (F2);

- a third transistor (Q7) presenting the base connected to the second side of the third bandpass filter (PB3) via a sixth resistance (R16) and the collector connected to a supply source (VDD2) via a seventh resistance (R17) as well as to the input of a third frequency divider (DV3);

- a second oscillator (OS2) adapted to generate the said frequency F2 in response to a control generated by the second microcomputer (μC2), presenting the output connected to the second side of the third bandpass filter (PB3) via an eighth resistance (R15);

- a second logic sum circuit (OR2) whose output is connected to the said first input of the second microcomputer (μC2), whose input is adapted to receive a signal via the said first pushbutton switch (T1), the output of the third frequency divider (DV3), as well as an output (V) of the second microcomputer;

- a selection keyboard (TS) connected to input-output channels of the second microcomputer (μC2);

- a plurality of memory elements connected to the second microcomputer (μC2);

- the said second switch (T2) connected to an input-output channel of the second microcomputer (μC2).

7) A circuital arrangement as claimed in claim 3 and 6 characterized in that the said memory elements consist of a random access memory of the nonvolatile type (MM) subdivided into a plurality of areas, as well as in that the microcomputer (μC) results also connected to a monitoring device (DS) via a relative control circuit (DD).

8) A circuital arrangement as claimed in claims 3 and 6 characterized in that the said memory elements consist of as many counters.

9) A circuital arrangement as claimed in claim 1, characterized in that the said supply unit (UA) comprises a current generator (G) adapted to extract energy from the telephone line and to determine the change of a capacitor (C), in response to the activation of an output (B) of the first microcomputer (μC1).

10) A circuital arrangement as claimed in claim 1, characterized in that it results connected to the telephone line via a bridge of diodes (PD).

11) A circuital arrangement as claimed in claim 2, characterized in that a respective diode (D3,D4 and D5) is connected between the base and the emitter of the said first, second and third transistor (Q5, Q6 and Q7).

12) A circuital arrangement as claim 1, characterized in that the said first

bandpass filter (PB1) is provided by way of a Zobel semicell presenting the inductance of the parallel resonator formed by the winding of a transformer.

13) A circuital arrangement as claimed in claims 3 and 6, characterized in that the said second and third bandpass filter (PB2 and PB3) are provided by way of a Zobel cell presenting the inductance of the parallel resonator formed by the winding of a transformer.

fig.1

fig.2

fig.3

fig.4

3/4

0123330

fig.5

fig.6

fig.7

fig.8